# EUROPEAN PATENT APPLICATION

(11) **EP 4 485 647 A1**
(43) Date of publication of application: **01.01.2025**
(21) Application number: 23759909.7
(22) Date of filing: 20.02.2023
(51) Int. Cl.: H01M 50/204, H01M 10/613, H01M 10/643, H01M 10/647, H01M 10/6554, H01M 10/658, H01M 10/659, H01M 50/227

(54) **BATTERY PACK**

(30) Priority: 24.02.2022 JP 2022026954
(71) Applicant: Panasonic Intellectual Property Management Co., Ltd., Kadoma-shi, Osaka 571-0057 (JP)
(72) Inventor: ISHIZAKA, Katsushi, Kadoma-shi, Osaka 571-0057 (JP)
(74) Representative: Novagraaf International SA
(86) International application number: PCT/JP2023/005909
(87) International publication number: WO 2023/162908

(57) **Abstract**

This battery pack includes a battery block and an outer covering case. The battery block includes: a plurality of cells aligned; and a holder that faces a longitudinal end surface of each of the plurality of cells and includes a storage part that stores the end surface. The holder includes a thermal resistor that inhibits heat transfer from the holder to the cell end surface.

## Description

### Technical Field

The present disclosure relates to battery packs.

### Background Art

A non-aqueous electrolyte secondary battery such as a lithium-ion battery is, when in use, in the form of a battery pack with a plurality of cells (batteries) electrically connected and stored in a case. If there is an anomaly in a cell within this battery pack and one cell generates abnormal heat, the heat may be transferred to a nearby cell via a side surface of said cell and a chain reaction of abnormal heat generation (heat transfer and spread) may occur. Particularly, the issue of heat transfer and spread is prominent in a battery pack in which the distance between adjacent cells is short as seen in an ultra-compact battery pack.

Patent Literature (PTL 1) discloses a battery pack in which a slit is formed on an inner wall side surface of each battery storage part in a holder that stores a plurality of cells so that heat transfer to an adjacent battery is inhibited.

### Citation List

### Patent Literature

PTL 1: International Publication No. WO 2020/031467

### Summary of Invention

A battery pack is required to have a structure that if heat is generated in a cell within the battery pack, prevents heat transfer and spread to an adjacent cell.

An object of the present disclosure is to provide a battery pack in which even if heat is generated in a cell, heat transfer and spread to an adjacent cell is inhibited.

A battery pack according to the present disclosure includes: a battery block; and an outer covering case. The battery block includes: a plurality of cells aligned; and a holder that faces a longitudinal end surface of each of the plurality of cells and includes a storage part that stores the end surface. The holder is characterized by including a thermal resistor that inhibits heat transfer from the holder to the cell end surface.

In a battery pack according to the present disclosure, even if heat is generated in a cell, heat transfer and spread to an adjacent cell can be inhibited.

### Brief Description of Drawings

[Fig. 1] Fig. 1 is an external view of a battery pack according to the present disclosure.
[Fig. 2] Fig. 2 is an external view of a battery block according to the present disclosure.
[Fig. 3] Fig. 3 is an exploded view of the battery block illustrated in Fig. 2.
[Fig. 4] Fig. 4 is a cross-sectional view of a part of a battery block according to the present disclosure that is a diagram for describing how heat is transferred between cells.
[Fig. 5A] Fig. 5A is a partial cross-sectional view of a battery block according to an exemplary embodiment of the present disclosure.
[Fig. 5B] Fig. 5B is a bottom view of a holder in a battery block according to an exemplary embodiment of the present disclosure.
[Fig. 6A] Fig. 6A is a partial cross-sectional view of a battery block according to another exemplary embodiment of the present disclosure.
[Fig. 6B] Fig. 6B is a bottom view of a holder in a battery block according to another exemplary embodiment of the present disclosure.
[Fig. 7A] Fig. 7A is a partial cross-sectional view of a battery block according to yet another exemplary embodiment of the present disclosure.
[Fig. 7B] Fig. 7B is a bottom view of a holder in a battery block according to yet another exemplary embodiment of the present disclosure.
[Fig. 7C] Fig. 7C is a bottom view of a holder in a battery block according to yet another exemplary embodiment of the present disclosure.
[Fig. 8A] Fig. 8A is a partial cross-sectional view of a battery block according to yet another exemplary embodiment of the present disclosure.
[Fig. 8B] Fig. 8B is a bottom view of a holder in a battery block according to yet another exemplary embodiment of the present disclosure.
[Fig. 9A] Fig. 9A is a partial cross-sectional view of a battery block according to yet another exemplary embodiment of the present disclosure.
[Fig. 9B] Fig. 9B is a bottom view of a holder in a battery block according to yet another exemplary embodiment of the present disclosure.
[Fig. 10A] Fig. 10A is a partial cross-sectional view of a battery block according to yet another exemplary embodiment of the present disclosure.
[Fig. 10B] Fig. 10B is a bottom view of a holder in a battery block according to yet another exemplary embodiment of the present disclosure.

### Description of Embodiments

Hereinafter, exemplary embodiments of the present disclosure will be described in detail with reference to the drawings. In the following description, specific shapes, materials, directions, numerical values, etc., are mere examples for facilitating understanding of the present disclosure and can be changed, as appropriate, according to application, purpose, specification, etc. Furthermore, structural elements in the exemplary embodiments and variations described below are inherently expected to be selectively combined.

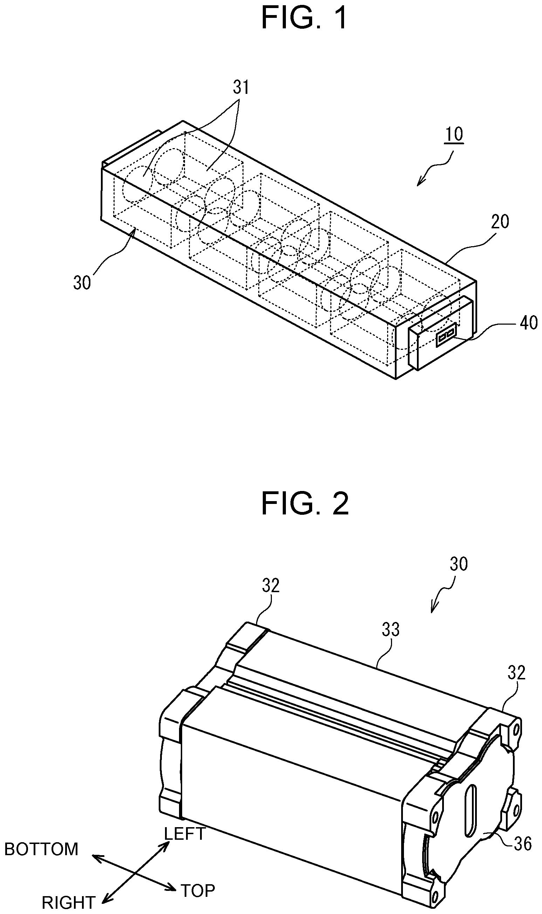

Fig. 1 is an external view of battery pack 10 according to the present disclosure. Battery pack 10 includes: outer covering case 20 made of a metal such as aluminum; and one or more battery blocks 30 stored in outer covering case 20. Note that outer covering case 20 is not limited to being made of a metal and may be made of a resin.

Battery block 30 includes a plurality of cells 31 aligned, and the plurality of cells 31 are electrically connected to each other. In battery block 30, the plurality of cells 31 are connected in parallel, for example. Battery pack 10, which includes the plurality of battery blocks 30 connected in series or in parallel, is configured to output a voltage suitable for a device to be used. Cell 31 is a cylindrical battery, for example. Note that the cylindrical battery is cited as an example of cell 31 in the present disclosure, but the battery is not limited to the cylindrical battery and may be a prismatic battery or the like.

Cell 31 is a cylindrical battery including: a cylindrical outer covering can with a closed end; and a sealing body that closes an opening part of the outer covering can. Furthermore, an insulating gasket is provided between the outer covering can and the sealing body. Generally, in cylindrical batteries, the sealing body serves as a positive terminal, and the outer covering can serves as a negative terminal. An exhaust valve for exhausting gas when the internal pressure increases due to the occurrence of an anomaly in cell 31 is provided on the sealing body. Note that the exhaust valve may be provided on the bottom of the outer covering can.

In the present disclosure, battery block 30 includes holder 32, side surface member 33, thermal insulation member 34, and so on, as described later. Battery pack 10 includes a terminal strip (current collector) that electrically connects the plurality of battery blocks 30. Each of the positive and negative terminals of battery blocks 30 is connected to the terminal strip. The terminal strip may be integrated with holder 32.

External terminal 40 that is electrically connected to battery block 30 is provided at an end part of outer covering case 20. External terminal 40 is used as a terminal that supplies a direct-current voltage when incorporated into a device on which battery pack 10 is mounted and used. External terminal 40 is also used to charge battery pack 10 (cell 31). External terminal 40 may be provided only on one of the end parts of battery pack 10 or may be provided at more than one location. Side surface member 33 constituting battery block 30 may also be used as outer covering case 20.

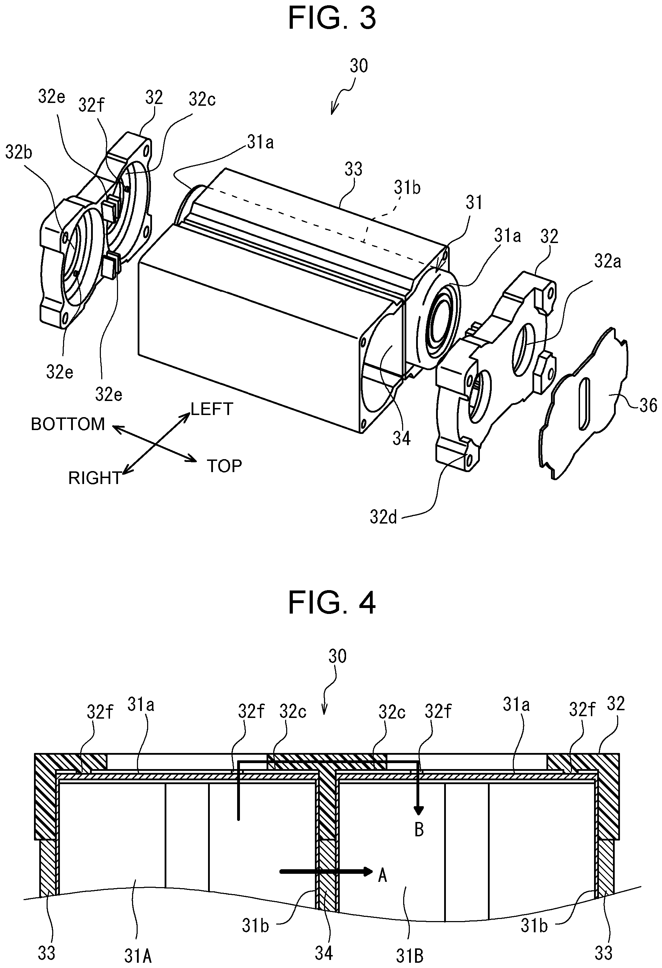

Next, the structure of battery block 30 will be described with reference to Fig. 2 and Fig. 3. Fig. 2 is an external view of battery block 30, and Fig. 3 is an exploded view of battery block 30. For the sake of explanation, the longitudinal direction of battery block 30 is defined as an up-to-down direction, and the lateral direction in which cells 31 are aligned is defined as a left-to-right direction, as illustrated in Fig. 2 and Fig. 3.

Battery block 30 is in the shape of a column made up of upper and lower holders 32 and side surface member 33. Battery block 30 is available in various shapes such as the shape of a polygonal column and the shape of a circular column according to the arrangement of the plurality of cells 31 to be stored therein or the application of battery pack 10, for example.

In battery block 30, the plurality of cells 31 are arranged in parallel, for example. As illustrated in Fig. 3, thermal insulation member 34 is disposed between adjacent cells 31 on side surface member 33 in battery block 30. Thermal insulation member 34 acts as a thermal insulation material that blocks heat from cell side surface 3 1b to prevent the transfer of heat to adjacent cell 31.

Side surface member 33 covers the entirety of the plurality of cells 31 in battery block 30 other than cell end surfaces 31a and holds cells 31. Side surface member 33 is formed of a high thermal conduction material containing a thermosetting resin and a thermal conductive filler and/or an endothermic filler, for example. Side surface member 33 is in contact with cell side surfaces 31b and configured so that when abnormal heat is generated in cell 31, the heat is transferred to side surface member 33. Note that the resin included in side surface member 33 is thermosetting unsaturated polyester, epoxy resin, melamine resin, or phenol resin, or thermoplastic polycarbonate, polyethylene, polypropylene, polyvinyl chloride, or polystyrene, for example. The thermal conductive filler is metal oxide (for example, aluminum oxide or zinc oxide), metal nitride (for example, aluminum nitride or boron nitride), or metal oxynitride (for example, aluminum oxynitride). The endothermic filler, which shows an endothermic reaction at the time of thermal decomposition, is aluminum hydroxide, magnesium hydroxide, or sodium hydrogen carbonate, for example. The endothermic filler functions to reduce heat generation when cell 31 generates abnormal heat.

Thermal insulation member 34 is disposed between two adjacent cells 31 along the axes of cells 31. Thermal insulation member 34 is formed of a thermal insulation material based on a thermal insulation resin, a foam resin, foam concrete, a gypsum board, glass wool, or a silica aerogel, for example. Thermal insulation member 34 is formed flat in Fig. 3, but may be curved to follow the shape of side surfaces of cells 31.

The lengths of side surface member 33 and thermal insulation member 34 along the long side (axis) of cells 31 are set less than the axial lengths of cells 31. Therefore, axially opposite cell end surfaces 31a of cell 31 project out from side surface member 33, as illustrated in Fig. 3.

Holder 32, which includes first and second holder members that face the opposite longitudinal end surfaces of the plurality of cells 31, is formed of a thermosetting resin, for example. Holder 32 is a member for holding cell end surfaces 31a that project upward and downward of side surface member 33 from the opposite longitudinal ends of the plurality of cells 31, and has the role of maintaining the shape of battery block 30 together with side surface member 33. Holder 32 further includes opening part 32a at a position on an end surface of holder 32 that corresponds to cell end surface 31a and is also used to connect an external electrode terminal and cell end surface 31a that forms a positive terminal or a negative terminal. Opening part 32a further has a role as a gas exhaust channel to be used when an anomaly occurs in cell 31.

Holder 32 includes storage part 32b having a shape corresponding to cell end surface 31a, as illustrated in Fig. 3. Storage part 32b includes: bottom surface part 32c which is a surface that faces cell end surface 31a; and a side surface part extending from bottom surface part 32c along cell side surface 31b.

Columnar part 32d is provided on a surface of holder 32 that is on the opposite side from bottom surface part 32c. Columnar part 32d fits onto columnar part 32d of another battery block 30 and is integrally stored in outer covering case 20 of battery pack 10. Thermal insulation sheet 36 is disposed in the space formed by fitting columnar parts 32d onto each other. Thermal insulation sheet 36 is provided so that gas released from cell end surface 31a of cell 31 that has generated abnormal heat does not strike another cell end surface 31a directly facing said cell end surface 31a, meaning that thermal insulation sheet 36 has the role of letting the gas escape in the left-to-right direction (a direction perpendicular to the axis).

Holder 32 includes, between adjacent storage parts 32b, clamping part 32e which is projecting parallel plates. Clamping part 32e is formed so as to clamp thermal insulation member 34 in the state where holder 32 is in abutment with an end surface of side surface member 33 and cell end surface 31a is stored.

A thermal resistor that inhibits heat transfer from holder 32 to cell end surface 31a is provided on holder 32. The thermal resistor illustrated in Fig. 3 is made up of bottom surface part 32c and protruding part 32f. Bottom surface part 32c is configured so as not to come into contact with cell end surface 31a of cell 31, but only protruding part 32f is configured so as to come into contact with cell end surface 31a of cell 31. The area of contact of protruding part 32f with cell end surface 31a is particularly small as compared to the area of bottom surface part 32c. Furthermore, an air layer is formed between bottom surface part 32c and cell end surface 31a and acts as a thermal insulation layer. Therefore, the heat transfer from holder 32 to cell end surface 31a is inhibited.

Note that the number of cells 31 in battery block 30 is not limited to two and may be three or more. The plurality of cells 31 are preferably arranged so that battery block 30 has a small cross-sectional area, but may be arranged in a straight line.

Next, a mechanism that inhibits heat transfer and spread to an adjacent cell in battery pack 10 according to the present disclosure will be described with reference to Fig. 4. Fig. 4 is a cross-sectional view of a part around cell end surfaces 31a in battery block 30. In Fig. 4, the left cell is denoted as 31A and the right cell is denoted as 31B. Note that while Fig. 4 illustrates only one (the upper one) of cell end surfaces 31a, substantially the same configuration can be applied to the other (the lower one) of cell end surfaces 31a. In Fig. 4, illustration of the inner structures of cells 31A, 31B is omitted.

Thermal insulation member 34 is disposed between cells 31A, 31B. Side surface member 33 is disposed on cell side surfaces 31b of cells 31A, 31B on which thermal insulation member 34 is not disposed. As illustrated in Fig. 3, side surface member 33 is formed so as to cover the entire side surfaces of cells 31A, 31B.

The entirety of cells 31A, 31B is covered by the metallic outer covering can and electrodes, and cell end surface 31a and cell end surface 31b are made of a metal. Cell end surface 31a is in contact with only protruding part 32f provided on storage part 32b, and cell side surface 31b located near cell end surface 31a is in contact with a side surface part of storage part 32b of holder 32. On cell side surface 31b located at a distance from cell end surface 31a, thermal insulation member 34 is interposed between cell 31A and cell 31B, and cell side surface 3 1b located in the other areas is in contact with side surface member 33. The route of heat transfer from cell 31A to cell 31B includes: route A through which the heat is transferred from cell side surface 31b via thermal insulation member 34; and route B through which the heat is transferred from cell end surface 31a to holder 32 and then transferred from holder 32 to cell end surface 31a. In route A, because of passing through thermal insulation member 34, less heat is transferred. Therefore, the heat is mainly transferred through route B passing through holder 32. When the heat transfer through route B is reduced, heat from an anomalous cell has less impact, meaning that the heat transfer and spread can be inhibited.

Holder 32 is formed so that bottom surface part 32c thereof facing cell end surface 31a does not come into contact with cell end surface 31a with the air layer interposed therebetween and only protruding part 32f comes into contact with cell end surface 31a. With this configuration, the air layer acts as a thermal insulation layer, and since the area of contact of protruding part 32f is small, the heat from holder 32 is less likely to be transferred via cell end surface 31a. As described above, holder 32 of battery block 30 according to the present disclosure includes a thermal resistor that inhibits heat transfer from holder 32 to cell end surface 31a.

Forming holder 32 of a thermosetting resin is advantageous in that melting of holder 32 due to heat generation of an anomalous cell and heat of emitted gas is prevented, and when the form of holder 32 is maintained, the thermal insulation layer formed by protruding part 32f is maintained.

Thus, even when abnormal heat is generated in cell 31, less heat is transferred through routes A, B, which are routes of heat transfer, meaning that adjacent cell 31B is less susceptible to the effects of the heat. Meanwhile, the heat of cell 31A can be dissipated via side surface member 33 that is in contact with cell side surface 31b. The heat of side surface member 33 that has received the heat from cell 31A can be released via outer covering case 20. In this manner, in battery pack 10 according to the present disclosure, heat generation at an anomalous cell has less impact, meaning that the heat transfer and spread can be inhibited. A further description will be given below by way of exemplary embodiments.

### <Embodiment 1>

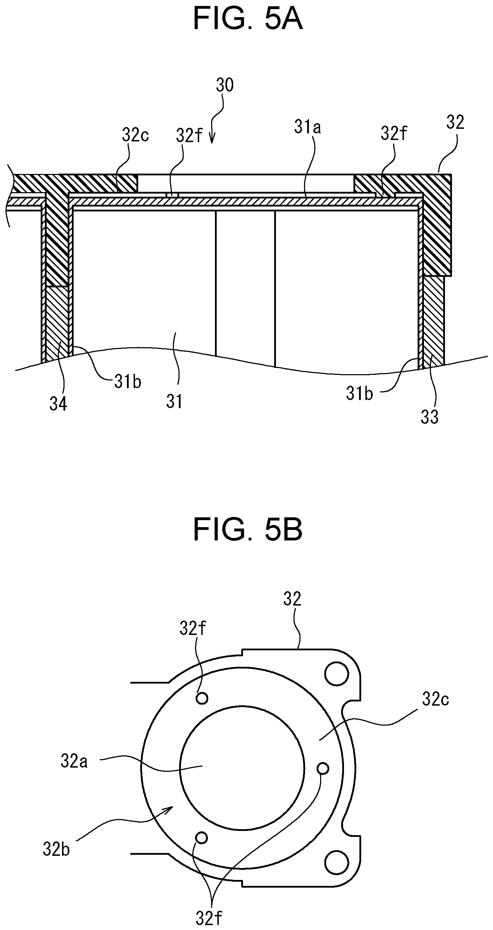

Fig. 5A and Fig. 5B illustrate battery block 30 according to Embodiment 1. Fig. 5A is a partial cross-sectional view of a part around one of cell end surfaces 31a of battery block 30 that has the same structure as the part around cell end surface 31a of cell 31B illustrated in Fig. 4. Fig. 5B is a bottom view of holder 32 as viewed from the cell 31 end. Note that in Fig. 5A and Fig. 5B, illustration of the inner structure of cell 31 is omitted.

With reference to Fig. 5B, the configuration of the thermal resistor provided on holder 32 of battery block 30 according to the present exemplary embodiment will be described. Holder 32 includes storage part 32b in the shape of a circular column corresponding to the cross-sectional shape of cell end surface 31a. Storage part 32b includes: bottom surface part 32c corresponding to cell end surface 31a; and opening part 32a at the center of bottom surface part 32c. Furthermore, holder 32 according to the present exemplary embodiment includes a plurality of protruding parts 32f projecting out from bottom surface part 32c. Protruding part 32f according to the present exemplary embodiment is formed as a columnar projection. With protruding parts 32f, bottom surface part 32c does not come into contact with cell end surface 31a, and the air layer (thermal insulation layer) is interposed between bottom surface part 32c and cell end surface 31a. Therefore, heat transferred from holder 32 via bottom surface part 32c is less likely to be transferred to cell end surface 31a because the heat needs to pass through the air layer. By properly setting the diameter of protruding part 32f, it is possible to inhibit heat transfer between holder 32 and cell end surface 31a.

Three protruding parts 32f are formed in the present exemplary embodiment, but the number of protruding parts 32f is not limited to three. The number of protruding parts 32f is preferably small to inhibit the heat transfer between holder 32 and cell end surface 31a. However, since protruding part 32f functions to support cell end surface 31a, it is preferable that more than one protruding part 32f be provided, but single protruding part 32f will suffice. The positions of protruding parts 32f are evenly dispersed in the circumferential direction of bottom surface part 32c, but may be concentrated on the outer side of holder 32 (on the side on which side surface member 33 is located in Fig. 5A and Fig. 5B) so that protruding parts 32f are distanced from adjacent cell 31. This positioning increases the length of the route of heat transfer that passes through protruding parts 32f (equivalent to route B in Fig. 4), meaning that the heat of adjacent cell 31 is less likely to be transferred. In battery pack 10 including holder 32 according to the present exemplary embodiment, bottom surface part 32c and protruding part 32f form a thermal resistor for the heat transfer from holder 32 to cell end surface 31a to inhibit the heat transfer between holder 32 and cell end surface 31a, and thus it is possible to inhibit the heat transfer and spread.

### <Embodiment 2>

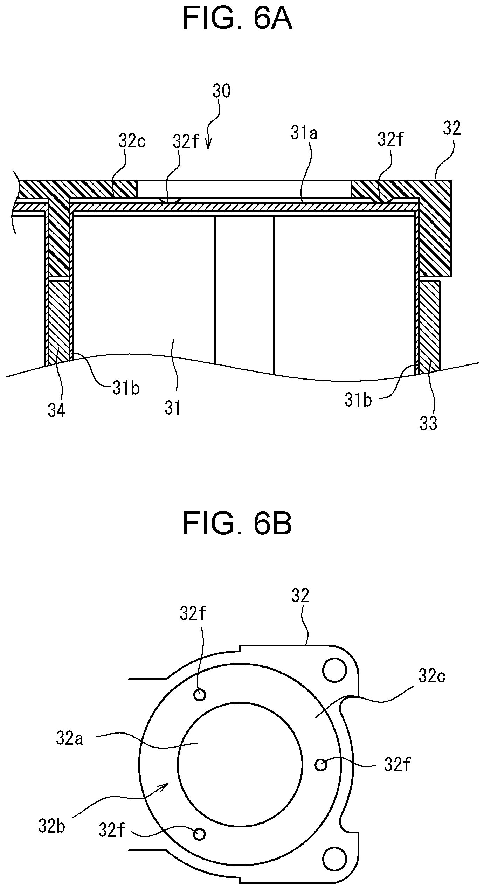

Fig. 6A and Fig. 6B illustrate battery block 30 according to Embodiment 2. Fig. 6A is a partial cross-sectional view of a part around one of cell end surfaces 31a of battery block 30 according to Embodiment 2, and Fig. 6B is a bottom view of holder 32 as viewed from the cell 31 end. Members that have substantially the same functions as those according to Embodiment 1 are assigned the same reference signs, and overlapping description will be omitted.

While protruding part 32f according to Embodiment 1 is in the shape of a column, protruding part 32f according to the present exemplary embodiment is in the shape of a spherical cap or in the shape of a hemisphere. The contact of protruding part 32f with cell end surface 31a in the present exemplary embodiment is theoretically made at a point, meaning that the heat transfer can be more effectively inhibited as compared to Embodiment 1. Even in the present exemplary embodiment, bottom surface part 32c and protruding part 32f form a thermal resistor for the heat transfer from holder 32 to cell end surface 31a to inhibit the heat transfer between holder 32 and cell end surface 31a, and thus it is possible to inhibit the heat transfer and spread.

### <Embodiment 3>

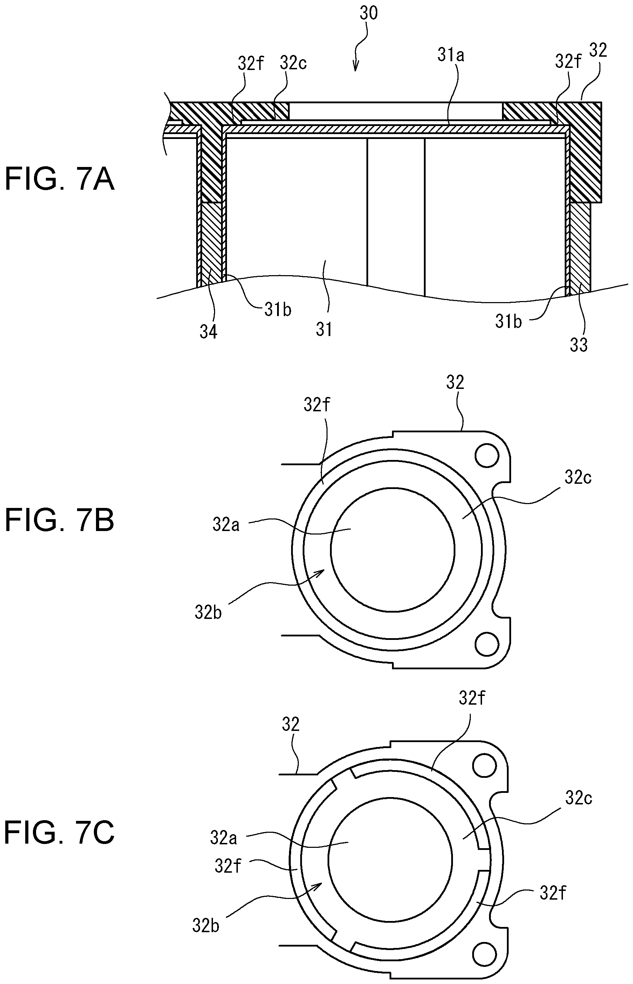

Fig. 7A, Fig. 7B, and Fig. 7C illustrate battery block 30 according to Embodiment 3. Fig. 7A is a partial cross-sectional view of a part around one of cell end surfaces 31a of battery block 30 according to Embodiment 3, and Fig. 7B is a bottom view of holder 32 as viewed from the cell 31 end. Fig. 7C is a bottom view of holder 32 according to a variation.

In the present exemplary embodiment, ring-shaped protruding part 32f is provided at the outer edge of bottom surface part 32c. The outer diameter of bottom surface part 32c is set substantially equal to the outer diameter of cell end surface 31a, and protruding part 32f is formed so as to abut the shoulder of cell end surface 31a in the state where cell end surface 31a is stored in storage part 32b. Protruding part 32f may be divided as a plurality of protruding parts 32f, as illustrated in Fig. 7C. The number of protruding parts 32f resulting from the division is not limited to that illustrated. Even in the present exemplary embodiment, bottom surface part 32c and protruding parts 32f form a thermal resistor for the heat transfer from holder 32 to cell end surface 31a to inhibit the heat transfer between holder 32 and cell end surface 31a, and thus it is possible to inhibit the heat transfer and spread.

### <Embodiment 4>

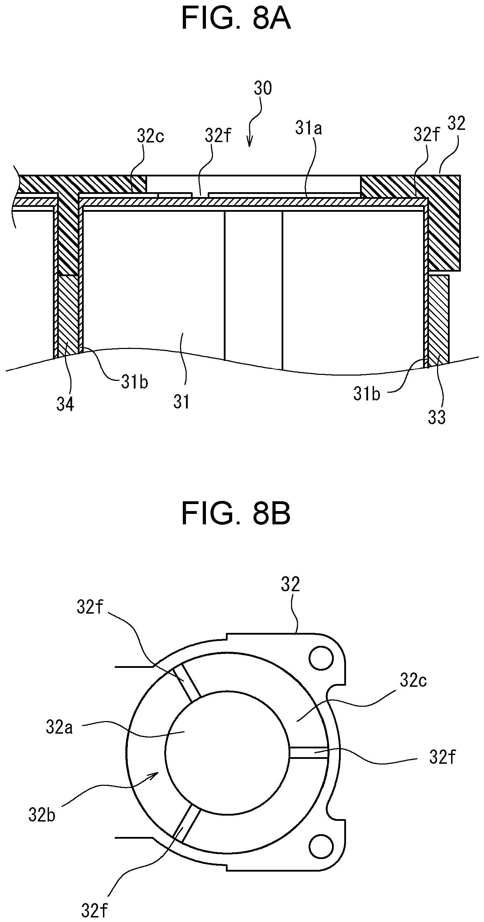

Fig. 8A and Fig. 8B illustrate battery block 30 according to Embodiment 4. Fig. 8A is a partial cross-sectional view of a part around one of cell end surfaces 31a of battery block 30 according to Embodiment 4, and Fig. 8B is a bottom view of holder 32 as viewed from the cell 31 end.

In the present exemplary embodiment, protruding parts 32f are formed of radial protrusions each extending in the radial direction of storage part 32b. The number and positions of protruding parts 32f are not limited to those illustrated. Even in the present exemplary embodiment, bottom surface part 32c and protruding parts 32f form a thermal resistor for the heat transfer from holder 32 to cell end surface 31a to inhibit the heat transfer between holder 32 and cell end surface 31a, and thus it is possible to inhibit the heat transfer and spread.

### <Embodiment 5>

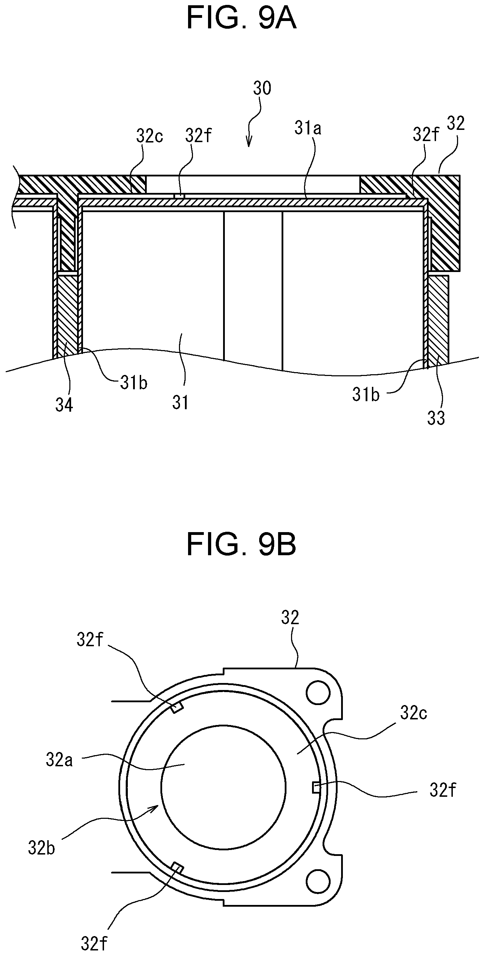

Fig. 9A and Fig. 9B illustrate battery block 30 according to Embodiment 5. Fig. 9A is a partial cross-sectional view of a part around one of cell end surfaces 31a of battery block 30 according to Embodiment 5, and Fig. 9B is a bottom view of holder 32 as viewed from the cell 31 end.

In the present exemplary embodiment, as protruding part 32f, a ring-shaped protrusion is provided at the outer edge of bottom surface part 32c, and a plurality of protrusions extending radially inward from the inner edge of the ring-shaped protrusion are further provided. The inner diameter of the ring-shaped protrusion is set substantially equal to or slightly less than the outer diameter of cell end surface 31a. The heights of the protrusions extending radially inward that are measured from bottom surface part 32c are set less than the height of the ring-shaped protrusion that is measured from bottom surface part 32c. As a result, cell side surface 31b near cell end surface 31a comes into contact with only protruding parts 32f, and an air layer is interposed in an area lower than protruding parts 32f. Therefore, the heat transfer from cell side surface 31b near cell end surface 31a to holder 32 can be further inhibited. Furthermore, since cell end surface 31a comes into contact with only the plurality of protrusions extending radially inward from the inner edge of the ring-shaped protrusion, bottom surface part 32c does not come into contact with cell end surface 31a, and heat is less likely to be transferred from holder 32 to cell end surface 31a with the air layer (thermal insulation layer) interposed between bottom surface part 32c and cell end surface 31a.

The configuration according to the present exemplary embodiment allows for a reduction in the area of contact between cell side surface 31b and holder 32, therefore making it possible to effectively inhibit the heat transfer via cell side surface 3 1b near cell end surface 31a. Even in the present exemplary embodiment, bottom surface part 32c and protruding parts 32f form a thermal resistor for holder 32 to inhibit the heat transfer between holder 32 and cell end surface 31a, and thus it is possible to inhibit the heat transfer and spread.

### <Embodiment 6>

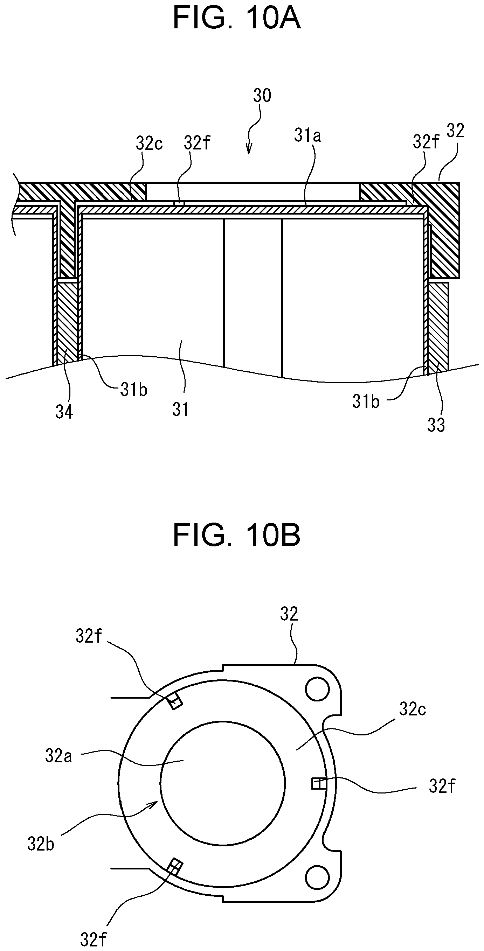

Fig. 10A and Fig. 10B illustrate battery block 30 according to Embodiment 6. Fig. 10A is a partial cross-sectional view of a part around one of cell end surfaces 31a of battery block 30 according to Embodiment 6, and Fig. 10B is a bottom view of holder 32 as viewed from the cell 31 end.

In the present exemplary embodiment, protruding part 32f is formed of a plurality of stepped protrusions (at three evenly spaced locations) each extending in the radial direction of storage part 32b from an inner wall side surface of storage part 32b. Protruding part 32f includes: a first inner peripheral part facing the inner wall side surface of storage part 32b; and a second inner peripheral part located further radially inward than the first inner peripheral part from the inner wall side surface of storage part 32b. The inner diameter of the first inner peripheral part of protruding part 32f is set substantially equal to the outer diameter of cell end surface 31a. The inner diameter of the second inner peripheral part of protruding part 32f is set less than the outer diameter of cell end surface 31a. The height of the second inner peripheral part of protruding part 32f measured from bottom surface part 32c is set one-step less than the height of the first inner peripheral part of protruding part 32f measured from bottom surface part 32c. As a result, cell side surface 31b near cell end surface 31a comes into contact with only the first peripheral part of protruding part 32f, and an air layer is interposed in an area other than the area of contact with the first inner peripheral part of protruding part 32f. Therefore, the heat transfer from cell side surface 31b near cell end surface 31a to holder 32 can be further inhibited. Furthermore, since cell end surface 31a comes into contact with only the second inner peripheral part of protruding part 32f, bottom surface part 32c does not come into contact with cell end surface 31a, and heat is less likely to be transferred from holder 32 to cell end surface 31a with the air layer (thermal insulation layer) interposed between bottom surface part 32c and cell end surface 31a.

The configuration according to the present exemplary embodiment allows for a reduction in the area of contact between cell side surface 31b and holder 32, therefore making it possible to effectively inhibit the heat transfer via cell side surface 3 1b near cell end surface 31a. Even in the present exemplary embodiment, bottom surface part 32c and protruding parts 32f form a thermal resistor for holder 32 to inhibit the heat transfer between holder 32 and cell end surface 31a, and thus it is possible to inhibit the heat transfer and spread.

Note that the present invention is not limited to the exemplary embodiments and variations thereof described above; it goes without saying that various changes, improvements, etc., can be carried out within the scope of recitations in the claims in the present application.

### Reference Signs List

- 10: battery pack
- 20: outer covering case
- 30: battery block
- 31: cell (battery)
- 31a: cell end surface
- 31b: cell side surface
- 32: holder
- 32a: opening part
- 32b: storage part
- 32c: bottom surface part
- 32d: columnar part
- 32e: clamping part
- 32f: protruding part
- 33: side surface member
- 34: thermal insulation member
- 36: thermal insulation sheet
- 40: external terminal

## Claims

1. A battery pack comprising:
a battery block; and
an outer covering case, wherein
the battery block includes:
a plurality of cells aligned; and
a holder that faces an end surface of each of the plurality of cells and includes a storage part that stores the end surface, the end surface being located at a longitudinal end of each of the plurality of cells, and
the holder includes a thermal resistor that inhibits heat transfer from the holder to the end surface.

2. The battery pack according to claim 1, wherein
the battery block includes:
a thermal insulation member between adjacent cells among the plurality of cells; and
a side surface member that holds a side surface of each of the plurality of cells.

3. The battery pack according to claim 1 or 2, wherein
the holder includes a first holder member and a second holder member that face cell end surfaces of each of the plurality of cells, the cell end surfaces being located at both longitudinal ends of each of the plurality of cells,
each of the first holder member and the second holder member includes a storage part that stores a facing one of the cell end surfaces, and
a bottom surface of the storage part of at least one of the first holder member or the second holder member includes the thermal resistor.

4. The battery pack according to any one of claims 1 to 3, wherein
the thermal resistor includes a protruding part on a bottom surface of the storage part that faces the end surface.

5. The battery pack according to claim 4, wherein
the protruding part is a protrusion in a shape of a circular column.

6. The battery pack according to claim 4, wherein
the protruding part is a protrusion in a shape of a spherical cap.

7. The battery pack according to claim 4, wherein
the protruding part is a protrusion disposed on an outer edge of the bottom surface of the storage part.

8. The battery pack according to claim 4, wherein
the protruding part is a radial protrusion disposed in a radial direction of the bottom surface of the storage part.

9. The battery pack according to claim 4, wherein
the protruding part includes:
a ring-shaped protrusion on an outer edge of the bottom surface of the storage part; and
a protrusion extending radially inward from the ring-shaped protrusion.

10. The battery pack according to claim 4, wherein
the protruding part includes:
a first inner peripheral part formed of a plurality of stepped protrusions each extending in a radial direction of the storage part from an inner wall side surface of the storage part, the first inner peripheral part facing the inner wall side surface of the storage part; and
a second inner peripheral part located further radially inward than the first inner peripheral part from the inner wall side surface of the storage part,
an inner diameter of the first inner peripheral part is set substantially equal to an outer diameter of the end surface,
an inner diameter of the second inner peripheral part is set less than the outer diameter of the end surface, and
a height of the second inner peripheral part measured from the bottom surface of the storage part is set one-step less than a height of the first inner peripheral part measured from the bottom surface of the storage part.

11. The battery pack according to claims 1 to 10, wherein
the holder is formed of a thermosetting resin.
